# EUROPÄISCHE PATENTSCHRIFT

(11) **EP 1 071 501 B1**
(45) Veröffentlichungstag und Bekanntmachung des Hinweises auf die Patenterteilung: **04.06.2003**
(21) Anmeldenummer: 99915511.2
(22) Anmeldetag: 12.03.1999
(51) Int. Cl.: B01D 27/06, B01D 29/21

(54) **RINGFÖRMIGES, RADIAL DURCHSTRÖMBARES FILTER MIT ENDSCHEIBE**
RING-SHAPED FILTER WITH RADIAL FLOW-THROUGH WITH AN END CAP
FILTRE ANNULAIRE A ECOULEMENT RADIAL AVEC UNE DISQUE TERMINAL

(30) Priorität: 26.03.1998 DE 19813320
(43) Veröffentlichungstag der Anmeldung: 31.01.2001
(73) Patentinhaber: MAHLE Filtersysteme GmbH, 70376 Stuttgart (DE)
(72) Erfinder: GEBERT, Hans, D-74080 Heilbronn (DE); SCHNEIDER, Horst, D-71336 Waiblingen (DE); WAIBEL, Hans, D-71686 Remseck/Aldingen (DE)
(74) Vertreter: Patentanwalts-Partnerschaft, Rotermund + Pfusch + Bernhard
(86) Internationale Anmeldenummer: DE9900671
(87) Internationale Veröffentlichungsnummer: WO99048589

(56) Entgegenhaltungen:
- EP-A- 0 559 011
- EP-A- 0 650 751
- EP-A- 0 773 052
- EP-A- 0 781 586

## Beschreibung

Die Erfindung betrifft ein Filterelement nach dem Oberbegriff des Patentanspruchs 1 sowie ein Verfahren zu dessen Herstellung.

Eine Endscheibe nach dem Oberbegriff des Anspruchs 1 ist bekannt aus EP 0 773 052 A1. Bei diesem Filter ist als elastisches Dichtmaterial für einen radialen Randzonenbereich der dortigen Filterendscheibe Vliesmaterial eingesetzt, das, um als Dichtung ausreichend funktionsfähig zu sein, von angrenzendem, relativ starrem Endscheibenmaterial gekammert werden muss oder in Mehrfachlagen mit gegenseitiger Verschweißung aufgebracht sein muss.

Des weiteren sind aus WO 97/41939 ringförmige Filterelemente mit Endscheiben bekannt, bei denen anstelle des gattungsgemäß in einem Randbereich radial innen und/oder außen angeformten zweiten Materials als radiale Dichtzone Dichtringe vorgesehen sind, die entweder in vorgefertigtem Zustand mit der Endscheibe verbunden werden oder durch den Einsatz von Federmitteln die erforderliche Elastizität verliehen erhalten.

Bei einem gattungsgemäßen Filterelement beschäftigt sich die Erfindung mit dem Problem, einen möglichst einfach herstellbaren und funktional sicher wirkenden, radial innen und /oder außen liegenden Randzonendichtbereich aus elastischem Material zu schaffen. Dabei soll dieser Randzonendichtbereich insbesondere eine hohe Betriebssicherheit über lange Einsatzzeiten gewährleisten und bei Endscheiben von Filterelementen eingesetzt werden, mit denen insbesondere Kraftstoff und Schmieröl von Verbrennungsmotoren aus Fahrzeugen gefiltert werden können.

Gelöst wird dieses Problem durch eine gattungsgemäße Endscheibe mit den kennzeichnenden Merkmalen des Anspruchs 1, wozu die Ausführungen nach den Ansprüchen 2 und 3 zweckmäßige Ausgestaltungen darstellen. Vorteilhafte Herstellungsverfahren sind Gegenstand der Ansprüche 4 und 5.

Das erfindungsgemäß für den Randzonendichtbereich vorgeschlagene zweite Material wird im Stand der Technik nach EP 0 650 751 A und DE 44 41 608 A1 bereits für die Herstellung einer Endscheibe eines Filterelementes eingesetzt. Nachteilig bei diesen bekannten Ausführungen ist, dass entweder die gesamte Endscheibe aus elastischem Material besteht (EP 0 650 751 A) und daher nur eine geringe Stabilität gegen Verformung aufweist oder dass zumindest keine vollständige Materialtrennung zwischen den radial unterschiedlich ausgebildeten Bereichen gegeben ist (DE 44 41 608 A1). Bei EP 0 650 751 A ist der radiale Randzonendichtbereich noch durch das Einbringen eines Zusatzmaterials zu verstärken, um eine ausreichende Dichtwirkung zu erzielen. Etwas anderes kann der Fachmann auch DE 44 41 608 A1 nicht entnehmen, da dort die gesamte Endscheibe aus einem gleichen Grundmaterial bestehen soll, das lediglich in einem radial dichtenden Bereich zusätzlich mit einem Material versehen werden soll, das unter Temperatur aufweichbar und in aufgeweichtem Zustand aushärtbar mit in ausgehärtetem Zustand elastischen Eigenschaften ist.

Auf eine Verstärkungsmaßnahme kann bei der aus DE 44 41 608 A1 bekannten Ausführung verzichtet werden, indem eine ganz spezielle Materialzusammensetzung für die Endscheibe gewählt wird. Bei dieser Ausführung müssen allerdings Kompromisse bezüglich einer gewünschten Stabilität der Endscheibe einerseits und einer ausreichenden Dichtwirkung des Endscheiberimaterials im Dichtungsbereich andererseits eingegangen werden. Dieser vorbekannte Stand der Technik ist daher nicht mit der vorteilhaften erfindungsgemäßen Lösung vergleichbar.

Nachfolgend noch näher beschriebene Ausführungsbeispiele sind in der Zeichnung dargestellt.

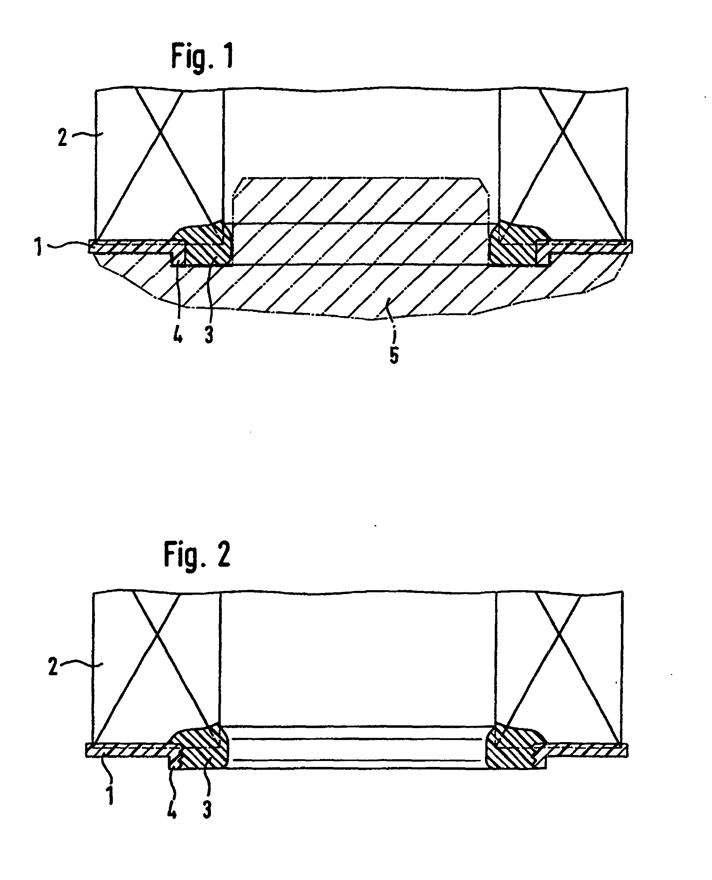

Es zeigen
- Fig. 1, 2: jeweils einen Längsschnitt durch unterschiedliche Ausführungsfonnen einer mit einem Filtermaterial verbundenen Endscheibe bei ausschnittsweiser Darstellung des Filterbahnmaterials und einer strichpunktiert angedeuteten Herstellungsform.

In eine Endscheibe 1 aus einem relativ starren Kunststoff ist ein Filterbahrimaterial 2 an seinen gefalteten Längsseiten dicht einplastifiziert. Das Filterbahnmaterial 2 kann aus Papier bestehen. Radial innen ist gleichzeitig an die Endscheibe 1 und das Filterbahnmaterial 2 ein Dichtring 3 angeformt.

Die Endscheibe 1 steht radial innen gegenüber dem Innenumfang des Filterbahnmaterials 2 zurück, so daß der Dichtring 3 einen axial nicht von der Endscheibe 1 abgedeckten Bereich des Filterbahnmaterials 2 erfaßt. Das Material des Dichtringes 3 ist einerseits dicht mit dem Innenumfangsbereich der Endscheibe 1 und andererseits dicht mit dem angrenzenden Filterbahnmaterial 2 verbunden. In das gefaltete Filterbahnmaterial 2 ragt das Material des Dichtringes 3 geringfügig hinein, wodurch eine garantiert feste und dichte Anbindung an das Filterbahnmaterial 2 des Dichtringes 3 gegeben ist.

Die Endscheibe 1 besitzt in dem an den Dichtring 3 angrenzenden Bereich einen axial abstehenden Ringbund 4. Dieser Ringbund 4 ermöglicht bei einer im übrigen flachen Ausbildung der Endscheibe 1 einen Dichtring 3 mit einer ausreichenden axialen Höhe und einer gleichzeitig radialen Abstützung über diese Höhe. Dadurch ist ein radiales Verpressen des Dichtringes 3 gegenüber einer zylindrischen Gegenfläche, gegenüber der eine Dichtung erreicht werden soll, möglich, die auch nach langer Betriebsdauer noch eine ausreichende Dichtfunktion gewährleistet.

Die radiale Anlagefläche des Ringbundes 4 für den Dichtring 3 kann für einen verbesserten Halt aufgerauht, geriffelt oder beispielsweise rilliert sein wie es in Fig. 2 angedeutet ist.

Der Dichtring 3 kann beispielsweise aus Nitrilkautschuk bestehen. Nitrilkautschuk ist ein Material, das in einem ersten relativ verformbaren Ausgangszustand in dem vorgesehenen Bereich des Filterbahnmaterials 2 und der Endscheibe 1 eingebracht und dort durch Wärmezufuhr erweicht werden kann, um in dem Erweichungszustand zu einem elastischen, dauerwirksamen Dichtmaterial auszuhärten. In erweichtem Zustand ist das Dichtmaterial zumindest in einem solchen Maße fließfähig, daß es in das Filterbahnmaterial 2, das heißt speziell in die Faltenzwischenräume des Filterbahnmaterials 2, eindringen kann, um sodann in diesem Zustand auszuhärten.

Ein Verfahren zum Anformen eines Dichtringes 3 an gleichzeitig den radialen Umfang einer Endscheibe 1 und an das von der Endscheibe gedichtete Filterbahnmaterial 2 kann nach beispielsweise dem nachstehend angegebenen Verfahren erfolgen.

In einem ersten Herstellungsschritt wird das zu einem Ring geformte zick-zack-förmige Filterbahnmaterial 2 in eine Kunststoff-Endscheibe 1 dicht eingeformt. Für den Einformvorgang wird das Endscheibenmaterial durch Erwärmung in dem Bereich, in dem die Einformung erfolgt, plastifiziert, das heißt in einen plastischen Zustand versetzt. Die Endscheibe 1 läßt einen radial innen liegenden Stirnbereich des Filterbahnmaterials unbedeckt. In diesem Zustand wird das Filterelement mit der Endscheibe 1 in eine Herstellungsform 5 eingelegt. Zuvor ist in diese Form 5 bereits ein Rohling für die Erzeugung des Dichtringes 3 eingesetzt worden. Dieser aus dem Material Nitrilkautschuk bestehende Rohling hat insgesamt Abmessungen, durch die ein Spiel gegenüber der Form 5, dem Filterbahnmaterial 2 sowie der Endscheibe 1 gegeben ist. In dem Nitrilkautschuk befindet sich in an sich bekannter Weise ein Bläh- bzw. Aufschäummittel, wodurch das Rohmaterial bei Wärmezufuhr aufschäumen kann. Um dieses Aufschäumen in der Herstellungs-Form 5 bei eingelegtem Filterelement erzielen zu können, wird die Form 5 erhitzt. Das Rohmaterial für den Dichtring 3 schäumt sodann in der Form 5 auf, in die die Gestalt des Dichtringes 3 eingearbeitet ist. Das aufschäumende Rohmaterial des Dichtringes 3 dringt stirnseitig in die Falten des Filterbahnmaterials 2 ein und verbindet sich dabei dicht mit diesem Filterbahnmaterial. Die axiale Eindringstufe des Dichtringmaterials in die Faltenräume hängt von der voreinstellbaren Aufschäumkapazität des Dichtringrohmaterials ab.

## Patentansprüche

1. Ringförmiges, radial durchströmbares Filterelement mit zick-zack-förmig gefaltetem, an mindestens einer seiner Längsseiten mit einer ringförmigen Endscheibe dicht verbundenem Bahnenmaterial als Filtermaterial, wobei die mindestens eine Endscheibe aus einem, einen umfangsmäßig umlaufenden, radialen Innen- und/oder Außenrandbereich nicht erfassenden ersten Bereich aus einem ersten Material und einem, diesen Randbereich, beziehungsweise diese Randbereiche, bildenden zweiten Bereich aus einem gegenüber dem ersten Material elastischeren zweiten Material gebildet ist,
**dadurch gekennzeichnet,**
**daß** der zweite Bereich aus gleichzeitig an das Bahnenmaterial (2) und das bereits fest mit dem Bahnenmaterial (2) verbundene erste Material (1) angeschäumtem zweitem Material (3) besteht.

2. Filterelement nach Anspruch 1,
**dadurch gekennzeichnet,**
**daß** das erste Material (1) im Bereich der radialen Anlage an dem zweiten Material (3) als ein über den von den übrigen ersten Material (1) eingenommenen Bereich axial abstehender Ringbund (4) ausgebildet ist.

3. Filterelement nach Anspruch 1 oder 2,
**dadurch gekennzeichnet,**
**daß** das zweite Material (3) aus einem unter Temperatur aufweichbaren, in aufgeweichtem Zustand aushärtbaren Basismaterial mit in zu dem zweiten Material (3) ausgehärtetem Zustand elastischen Eigenschaften besteht.

4. Verfahren zur Herstellung eines Filterelementes nach Anspruch 3,
**dadurch gekennzeichnet,**
**daß** das dem zweiten Material (3) zugrundeliegende Basismaterial in dem auszufüllenden Randbereich, beziehungsweise in den auszufüllenden Randbereichen des Filterelementes, in noch nicht ausgehärtetem Zustand aufgebracht, auf Erweichungstemperatur erwärmt und sodann ausgehärtet wird.

5. Verfahren nach Anspruch 4,
**dadurch gekennzeichnet,**
**daß** das Erweichen und Aushärten des zweiten Materials (3) in einer dessen Basismaterial sowie die angrenzenden Filterelementbereiche umschließenden Form erfolgt.

## Claims

1. A ring-shaped filter with radial flow-through with a web material as filter material which is folded in a zigzag shape and connected by at least one of its longitudinal sides to a ring-shaped end plate, wherein the at least one end plate includes a first region made from a first material and not enclosing a circumferentially extending radial inner and/or outer peripheral area, and a second region made from a second material which is more elastic than the first, which second region forms this or these peripheral areas,
**characterized in that**
the second area is made from foamed second material (3) which is bonded at the same time with the web material (2) and with the first material (1) which is already bonded with the web material (2).

2. The filter according to Claim 1,
**characterized in that**
in the area where it is radially adjacent second material (3) the first material (1) is conformed as an annular collar (4) offset axially over the area occupied by the rest of first material (1).

3. The filter according to Claim 1 or 2,
**characterized in that**
the second material (3) is made from a base material that can be softened by the application of heat and in the softened state can be cured to form second material (3) having elastic properties in the cured state.

4. A method pro producing a filter according to Claim 3,
**characterized in that**
the base material that is used to make second material (3) is introduced in the uncured state into the peripheral area or areas of the filter to be filled, heated to a temperature at which it softens, and then cured.

5. The method according to Claim 4,
**characterized in that**
the softening and curing of the second material (3) takes place in a mould that surrounds both the base material thereof and the adjacent filter areas.

## Revendications

1. Élément filtrant annulaire à écoulement radial comprenant un matériau en feuille comme matériau filtrant, plié en zigzag et lié hermétiquement sur au moins l'un de ses côtés longitudinaux à un disque d'extrémité annulaire, le au moins un disque d'extrémité étant formé d'une première zone en un premier matériau, qui n'occupe pas une zone de bordure intérieure et/ou extérieure radiale, circonférentiellement continue, et d'une seconde zone en un second matériau plus élastique que le premier, qui forme cette zone de bordure ou ces zones de bordure,
**caractérisé en ce**
**que** la seconde zone est formée du second matériau (3) moussé simultanément sur le matériau en feuille (2) et sur le premier matériau (1), déjà lié fixement au matériau en feuille (2).

2. Elément filtrant suivant la revendication 1,
**caractérisé en ce**
**que** le premier matériau (1) est réalisé dans la zone de l'appui radial sur le second matériau (3) sous forme d'un collet annulaire (4), dépassant axialement de la zone occupée par le reste du premier matériau (1).

3. Elément filtrant suivant l'une des revendications 1 et 2,
**caractérisé en ce**
**que** le second matériau (3) est formé d'un matériau de base ramollissable sous l'effet de la température, durcissable à l'état ramolli, avec des propriétés élastiques à l'état durci en le second matériau (3).

4. Procédé de fabrication d'un élément filtrant suivant la revendication 3,
**caractérisé en ce**
**que** le matériau de base formant le second matériau (3) est appliqué dans la zone de bordure à remplir, ou dans les zones de bordure à remplir de l'élément filtrant, à l'état non encore durci, chauffé à la température de ramollissement et ensuite durci.

5. Procédé suivant la revendication 4,
**caractérisé en ce**
**que** le ramollissement et le durcissement du second matériau (3) s'opèrent dans un moule entourant son matériau de base ainsi que les zones limitrophes de l'élément filtrant.
